Europäisches Patentamt

European Patent Office

Office européen des brevets

(19)

(11) Veröffentlichungsnummer: **0 050 816**
**B1**

(12) **EUROPÄISCHE PATENTSCHRIFT**

(45) Veröffentlichungstag der Patentschrift:
**12.09.84**

(21) Anmeldenummer: **81108470.6**

(22) Anmeldetag: **17.10.81**

(51) Int. Cl.³: **A 01 K  1/00,** F 24 F  7/013

(54) **Stallbelüftung.**

(30) Priorität: **29.10.80  DE 8028773 U**

(43) Veröffentlichungstag der Anmeldung:
**05.05.82 Patentblatt 82/18**

(45) Bekanntmachung des Hinweises auf die Patenterteilung:
**12.09.84 Patentblatt 84/37**

(84) Benannte Vertragsstaaten:
**AT BE CH DE FR GB IT LI LU NL SE**

(56) Entgegenhaltungen:
**DE - A - 1 753 283**
**DE - A - 2 523 559**
**DE - A - 2 555 199**

(73) Patentinhaber: **Te So Ten Elsen GmbH & Co**
**Kommanditgesellschaft, Dassendaler Weg 13,**
**D-4176 Sonsbeck (DE)**

(72) Erfinder: **Ten Elsen, Johannes, Dassendaler Weg 13,**
**D-4176 Sonsbeck (DE)**

(74) Vertreter: **Stark, Walter, Dr.-Ing., Moerser Strasse 140,**
**D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Stallbelüftung mit mehreren, im oberen Bereich eines Stallgebäudes angeordneten Lüftungsöffnungen, die innenseitig mit zugeordneten, an Scharnierträgern schwenkbaren Lufteinlassklappen verschliessbar sind, und mit wenigstens einem Ventilator zum Absaugen der Abluft, wobei die Lüftungsöffnungen in den Seitenwandungen des Stallgebäudes unterhalb der Dachisolierung angeordnet sind und die Lufteinlassklappen in Offenstellung sich im wesentlichen parallel zur Dachisolierung erstrecken.

Eine wesentliche Forderung an die Stallbelüftung besteht darin, dass der gesamte Stallraum am Luftaustausch gleichmässig teilnehmen soll. Handelt es sich um eine Zwangsbelüftung, die durch Ventilatoren betrieben wird, dann werden die Ventilatoren in der Regel auf der Abluftseite angeordnet, während auf der Zuluftseite ein oder mehrere Lufteinlassklappen angeordnet werden, und zwar im oberen Bereich des Stalles bzw. der Stalldecke, weil über die Lufteinlassklappen frische, kühle Luft in den Stall einströmen soll.

Bei einer bekannten Stallbelüftung der eingangs beschriebenen Gattung (DE-A-2 555 199) sind die Lüftungsöffnungen in der vertikalen Stallwand angeordnet. Unterhalb der Lüftungsöffnung befindet sich ein elektromotorischer Antrieb mit Scharnieren für die Lüftungsklappe, die nicht unter der Wirkung einer Druckdifferenz, sondern mit Hilfe des motorischen Antriebs verstellt wird. Das erfordert besondere steuerungstechnische Massnahmen, die aufwendig sind.

Bei einer anderen Stallbelüftung (DE-A-1 753 283) befinden sich Lüftungsöffnungen in der horizontal verlaufenden Stalldecke. Darunter ist eine schwenkbare Lufteinlassklappe angeordnet, die sich ebenfalls horizontal erstreckt. Wenn die Lüftungsklappe geöffnet wird, fällt die kalte Frischluft ziemlich schnell in den darunter befindlichen Stallbereich ab. Dadurch werden die unterhalb der Klappen liegenden Stallbereiche bevorzugt belüftet, sie sind im Winter kälter als andere Stallbereiche.

Aufgabe der Erfindung ist es, eine Stallbelüftung der eingangs beschriebenen Gattung so zu gestalten, dass ohne steuerungstechnischen Aufwand die Verstellung der Lufteinlassklappen automatisch nach Massgabe der sich einstellenden Ventilatorleistung beim Absaugen der Abluft erfolgt.

Diese Aufgabe wird mit einer Stallbelüftung der eingangs beschriebenen Gattung gelöst, die gekennzeichnet ist durch einen von der Stallwandung abstehenden und mit der Dachisolierung einen Strömungskanal bildenden Scharnierträger sowie durch wenigstens einen an jeder Lufteinlassklappe befestigten, sich in Richtung auf den Scharnierträger und über das Scharnier hinaus erstreckenden Halter für wenigstens ein daran befestigtes Ausgleichsgewicht.

Bei dieser Stallbelüftung erfolgt die Verstellung der Lufteinlassklappen automatisch, weil diese frei schwenkbar an ihren Scharnierträgern gelagert sind. Obgleich die Lüftungsöffnungen in den vertikalen Seitenwandungen des Stallgebäudes angeordnet sind, lässt sich dennoch eine sehr empfindliche Lagerung der Lufteinlassklappen erreichen, weil die Lufteinlassklappen sich in geschlossenem Zustand nicht parallel zur vertikalen Stallwand erstrecken brauchen. Vielmehr können die Lufteinlassklappen auch schräg angeordnet sein. Das ermöglicht der Scharnierträger, der von der Stallwandung absteht und der zusammen mit der Dachisolierung einen Strömungskanal bildet, welcher von der jeweiligen Lufteinlassklappe verschlossen ist.

Dadurch, dass die Lufteinlassklappe in geschlossenem Zustand schräg steht, wird eine feinfühlige Verstellung der Lufteinlassklappe unter der Wirkung der durch den Strömungskanal in den Stall einströmenden Frischluft möglich. Die Lufteinlassklappe und ihr zugeordnetes Ausgleichsgewicht verhalten sich nämlich bei Schrägstellung, insbesondere wenn diese Schrägstellung sich einer Horizontalstellung nähert, ähnlich wie eine empfindliche Waage, bei der schon geringfügige Stellkräfte genügen, um die Waage in ihren Ruhezustand zurückzubringen. Deswegen stellen sich auch die Lufteinlassklappen der erfindungsgemässen Stallbelüftung bereits bei geringfügigen Druckunterschieden zwischen dem Inneren des Stalles und der Umgebung sehr feinfühlig ein, wobei die in den Stall einströmende Frischluft stets in Richtung der Dachisolierung strömt und sich erst später im Stall verteilt, so dass die Ausbildung von Temperaturdifferenzen und insbesondere sehr kalter Bereiche im Stall vermieden wird.

Insbesondere sind Anordnungenn möglich, bei denen das Scharnier am unteren Rand der Klappe angeordnet ist, so dass die zugeführte Frischluft von der Klappe zunächst gegen die Stalldecke gelenkt wird und sich dann im Stallraum verteilen kann.

Der Halter kann eine einfache Stange sein, die insbesondere im wesentlichen die Länge des Scharnierträgers aufweisen kann. Um Gleichgewichtsverhältnisse bzw. die Ruhestellung der Klappe und das Öffnen der Klappe unter Wirkung der zugeführten Frischluft nach Massgabe der gegebenen Umstände einstellen zu können, sollte das Ausgleichsgewicht oder sollten die Ausgleichsgewichte verschieblich an der Stange angeordnet sein.

Das Scharnier kann aus zwei ineinandergreifenden Winkelprofilen bestehen, von denen eines am Scharnierträger und das andere an der Klappe befestigt ist, so dass die Klappe lediglich aufgrund ihres Eigengewichtes am Scharnierträger gehalten ist. Der Scharnierträger kann auch einen Anschlag zur Begrenzung der Schwenkbewegung der Klappe aufweisen.

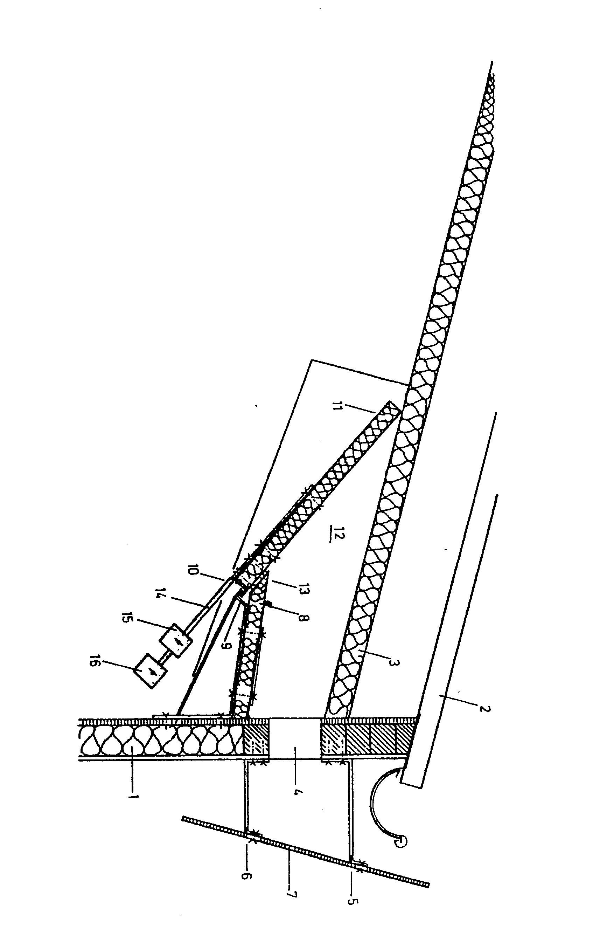

Im folgenden wird ein in der Zeichnung dargestelltes Ausführungsbeispiel der Erfindung erläutert; es zeigt die einzige Figur in schematischer Darstellung einen Querschnitt durch einen Stall im Bereich einer Lüftungsöffnung mit Lüftungsklappe.

In der Zeichnung ist eine Seitenwandung 1 eines Stalles mit Dachkonstruktion 2 und Dachisolierung 3 dargestellt. Die Seitenwandung 1 weist unterhalb der Dachisolierung 3 eine Lüftungsöffnung 4 auf, der aussen eine an Halterungen 5, 6 befestigte Windabweisplatte 7 gegenüberliegt.

An der Innenseite der Seitenwandung 1 ist unterhalb der Lüftungsöffnung 4 ein Scharnierträger 8 befestigt, beim dargestellten Ausführungsbeispiel angeschraubt, der an seiner Unterseite als eine Scharnierhälfte ein nach oben offenes Winkelprofil 9 trägt, in das ein nach unten offenes Winkelprofil 10 eingreift, welches am unteren Rand einer Klappe 11 befestigt ist.

Die Klappe 11 ist in geschlossenem Zustand dargestellt, d.h. sie verschliesst den zwischen der Dachisolierung 3 und dem Scharnierträger 8 gebildeten Strömungskanal 12. Wie in der Zeichnung dargestellt, ist das freie Ende 13 des Scharnierträgers 8 in Richtung der sich in Ruhestellung befindlichen Klappe 11 abgeschrägt und bildet ein Widerlager für die Klappe 11.

Die Klappe 11 weist im übrigen wenigstens eine mit ihr verschraubte Stange 14 auf, die sich über das von den Winkelprofilen 9, 10 gebildete Scharnier hinaus erstreckt, wobei die Länge der Stange 14 etwa dem Abstand des Scharniers 9, 10 zur Seitenwandung 1 entspricht. An der Stange 14 sind beim dargestellten Ausführungsbeispiel zwei Ausgleichsgewichte 15, 16 befestigt, die längs der Stange 14 verschieblich sind.

Durch Verschieben bzw. Einstellen der Ausgleichsgewichte 15, 16 kann die Klappe in einen Gleichgewichtszustand oder in einen solchen Zustand gebracht werden, dass sie in der dargestellten Lage eine verhältnismässig geringe Rückstellkraft besitzt und deswegen bei Inbetriebnahme eines nicht dargestellten Ventilators der Stallbelüftung unter der Wirkung der durch den Strömungskanal 12 zuströmenden Frischluft in die mit gestrichelten Linien dargestellte Lage schwenkt. Dann wird die Frischluft von der Klappe 11 längs der Dachisolierung 3 bzw. unterhalb dieser Dachisolierung 3 geführt, so dass sie sich gleichmässig im Stall verteilen kann.

## Patentansprüche

1. Stallbelüftung mit mehreren, im oberen Bereich eines Stallgebäudes angeordneten Lüftungsöffnungen (4), die innenseitig mit zugeordneten, an Scharnierträgern (8) schwenkbaren Lufteinlassklappen (11) verschliessbar sind, und mit wenigstens einem Ventilator zum Absaugen der Abluft, wobei die Lüftungsöffnungen (4) in den Seitenwandungen (2) des Stallgebäudes unterhalb der Dachisolierung (3) angeordnet sind und die Lufteinlassklappen (11) in Offenstellung sich im wesentlichen parallel zur Dachisolierung (3) erstrecken, gekennzeichnet durch einen von der Stallwandung abstehenden und mit der Dachisolierung (3) einen Strömungskanal (12) bildenden Scharnierträger (8) sowie durch wenigstens einen an jeder Lufteinlassklappe (11) befestigten, sich in Richtung auf den Scharnierträger (8) und über das Scharnier (9, 10) hinaus erstreckenden Halter (14) für wenigstens ein daran befestigtes Ausgleichsgewicht (15, 16).

2. Stallbelüftung nach Anspruch 1, dadurch gekennzeichnet, dass das Scharnier (9, 10) am unteren Rand der Klappe (11) angeordnet ist.

3. Stallbelüftung nach Anspruch 1 oder 2, dadurch gekennzeichnet, dass der Halter eine Stange (14) ist.

4. Stallbelüftung nach einem der Ansprüche 1 bis 3, dadurch gekennzeichnet, dass die Stange (14) im wesentlichen die Länge des Scharnierträgers (8) aufweist.

5. Stallbelüftung nach einem der Ansprüche 1 bis 4, dadurch gekennzeichnet, dass das Ausgleichsgewicht (15, 16) verschieblich an der Stange (14) angeordnet ist.

6. Stallbelüftung nach einem der Ansprüche 1 bis 5, dadurch gekennzeichnet, dass das Scharnier aus zwei ineinandergreifenden Winkelprofilen (9, 10) besteht, von denen eines am Scharnierträger (8) und das andere an der Klappe (11) befestigt ist und dass die Klappe (11) lediglich aufgrund ihres Eigengewichtes am Scharnierträger (8) gehalten ist.

7. Stallbelüftung nach einem der Ansprüche 1 bis 6, dadurch gekennzeichnet, dass der Scharnierträger (8) einen Anschlag (13) zur Begrenzung der Schwenkbewegung der Klappe (11) aufweist.

## Claims

1. Stable ventilation with a plurality of ventilation openings (4) which are disposed in the upper region of a stable structure, and may be closed on the inner side with associated air inlet flaps (11), which may be pivoted on hinge supports (8), and with at least one ventilator for drawing off the spent air, the ventilation openings (4) being disposed in the lateral walls (2) of the stable structure below the roof insulation (3) and the air inlet flaps (11) extending, in the open position, essentially parallel to the roof insulation (3), characterized by a hinge support (8) which is at a distance from the stable wall and forms, with the roof insulation (3), a flow duct (12), and by at least one holding device (14), secured on each air inlet flap (11) and extending towards the hinge support (8) and beyond the hinge (9, 10), for at least one counter-weight (15, 16) fastened thereon.

2. Stable ventilation according to claim 1, characterized in that the hinge (9, 10) is disposed at the lower edge of the flap (11).

3. Stable ventilation according to claim 1 or 2, characterized in that the holding device is a rod (14).

4. Stable ventilation according to one of claims 1 to 3, characterized in that the rod (14) is essentially the same length as the hinge support (8).

5. Stable ventilation according to one of claims 1 to 4, characterized in that the counter-weight (15, 16) is disposed in a sliding manner on the rod (14).

6. Stable ventilation according to one of claims 1 to 5, characterized in that the hinge consists of two angle sections (9, 10), one of which is fastened on the hinge support (8) and the other of which is fastened on the flap (11) and in that the flap (11) is held on the hinge support (8) only by virtue of its inherent weight.

7. Stable ventilation according to one of claims 1 to 6, characterized in that the hinge support (8) has a stop (13) for delimiting the pivotal movement of the flap (11).

## Revendications

1. Ventilation d'étable comportant plusieurs ouvertures d'aération (4) disposées dans la région supérieure d'un bâtiment d'étable, qui peuvent être fermées du côté intérieur par des volets d'admission d'air correspondants (11) pouvant pivoter sur des poutres à charnière (8), et au moins un ventilateur servant à aspirer l'air usé, les ouvertures d'aération (4) étant disposées dans les murs latéraux (2) du bâtiment d'étable, en dessous de l'isolation de toit (3) et les volets d'admission d'air (11) étant dirigés, en position ouverte pratiquement parallèlement à l'isolation de toit (3), caractérisée par une poutre à charnière (8) s'écartant du mur de l'étable et formant avec l'isolation de toit (3) un canal d'écoulement (12), ainsi que par au moins un support (14) fixé à chaque volet d'admission d'air (11), s'étendant en direction de la poutre à charnière (8) et au-delà de la charnière (9, 10) et destiné à au moins un contrepoids (15, 16) qui lui est fixé.

2. Ventilation d'étable selon la revendication 1, caractérisée en ce que la charnière (9, 10) est disposée au bord inférieur du volet (11).

3. Ventilation d'étable selon l'une des revendications 1 à 2, caractérisée en ce que le support est une tige (14).

4. Ventilation d'étable selon l'une des revendications 1 à 3, caractérisée en ce que la tige (14) présente pratiquement la longueur de la poutre à charnière (8).

5. Ventilation d'étable selon l'une des revendications 1 à 4, caractérisée en ce que le contrepoids (15, 16) est disposé de façon coulissante sur la tige (14).

6. Ventilation d'étable selon l'une des revendications 1 à 5, caractérisée en ce que la charnière est formée de deux profilés en cornière (9, 10) s'engageant l'un dans l'autre, dont l'un est fixé à la poutre à charnière (8) et l'autre au volet (11) et que le volet (11) est simplement retenu sur la poutre à charnière (8) en vertu de son propre poids.

7. Ventilation d'étable selon l'une des revendications 1 à 6, caractérisée en ce que la poutre à charnière (8) présente une butée (13) pour limiter le mouvement de pivotement du volet (11).

5